# EUROPÄISCHE PATENTANMELDUNG

(11) **EP 3 795 294 A1**
(43) Veröffentlichungstag der Anmeldung: **24.03.2021**
(21) Anmeldenummer: 20184180.6
(22) Anmeldetag: 06.07.2020
(51) Int. Cl.: B23Q 39/04, B23Q 1/52, B23B 3/30

(54) **SCHWENKVORRICHTUNG FÜR WERKSTÜCKSPINDEL EINER WERKZEUGMASCHINE, WERKZEUGTRÄGER FÜR EINE WERKZEUGMASCHINE UND WERKZEUGMASCHINE**

(30) Priorität: 04.07.2019 DE 102019209850
(71) Anmelder: EMCO Magdeburg GmbH, 39124 Magdeburg (DE)
(72) Erfinder: Wilhelm, Christian, 06406 Bernburg (DE); Hansch, Stefan, 83278 Traunstein (DE); Voit, Walter, 83313 Siegsdorf (DE)
(74) Vertreter: Hoffmann Eitle

(57) **Zusammenfassung**

Die Erfindung stellt eine Schwenkvorrichtung 10 für eine Werkstückspindel einer Werkzeugmaschine 1, insbesondere einer Drehmaschine, zur Bearbeitung eines Werkstücks W, insbesondere von Stangenmaterial, das bevorzugt zumindest abschnittsweise aus Metall oder dergleichen ausgebildet ist, bereit. Die erfindungsgemäße Schwenkvorrichtung 10 weist ein Gehäuse 11 zum Anbringen der Schwenkvorrichtung 10 an einer Werkzeugmaschine 1, eine Trägervorrichtung 20 zur Aufnahme einer Werkstückspindel 30 der Werkzeugmaschine 1, die drehbar in dem Gehäuse 1 gelagert ist, und einen am Gehäuse 11, insbesondere im Gehäuse 11, vorgesehenen Antrieb 12 zum Antreiben einer Schwenk- und/oder Drehbewegung der Trägervorrichtung 20 um eine Schwenkachse Y₁ relativ zum Gehäuse 11, auf, wobei der Antrieb ein Torquemotor oder ein Master-Slave Zahnradantrieb ist. Überdies stellt die Erfindung einen Werkzeugträger 50 für eine Werkzeugmaschine und eine Werkzeugmaschine, welche insbesondere die erfindungsgemäße Schwenkvorrichtung 10 und gegebenenfalls den erfindungsgemäßen Werkzeugträger 50 aufweist.

## Beschreibung

### Technisches Gebiet

Die vorliegende Erfindung betrifft eine Schwenkvorrichtung für eine Werkstückspindel einer Werkzeugmaschine, einen Werkzeugträger für eine Werkzeugmaschine und eine Werkzeugmaschine zur Bearbeitung von Werkstücken, insbesondere Stangenmaterial. Ferner betrifft die vorliegende Erfindung ein Be- und Entladesystem für eine Werkzeugmaschine für die Zufuhr von zu bearbeitenden Werkstücken und/oder Abfuhr von durch die Werkzeugmaschine bearbeiteten Werkstücken.

### Stand der Technik

Bekannt sind Werkzeugmaschinen zur Bearbeitung von Werkstücken, bei denen in einer Werkzeugmaschine beide Enden des Werkstücks bearbeitet werden können, d.h. eine Zweiseitenbearbeitung des Werkstücks durchgeführt werden kann.

Bei der in DE 195 21 846 A1 beschriebenen Drehmaschine dieser Art ist in jedem von zwei Spindelstöcken jeweils eine Werkstückspindel rotierend antreibbar gelagert. Jeder Spindelstock trägt auf der der Werkstückspindel gegenüberliegenden Seite eine Werkzeugaufnahme. Die darin aufgenommenen Werkzeuge dienen zur Bearbeitung des jeweils an der Werkstückspindel des anderen Spindelstocks gespannten Werkstücks. Diese Drehmaschine ermöglicht sowohl eine vollständig automatischen Werkstücktransport ohne das Vorsehen zusätzlicher Werkstück-Handhabungseinrichtungen als auch eine Zweiseitenbearbeitung der Werkstücke. Das Werkstück wird hierzu in vertikaler Ausrichtung der ersten Werkstückspindel durch deren Werkstückspannmittel von einer horizontalen Auflage aufgenommen, nach dem Schwenken dieser ersten Werkstückspindel in die Horizontale durch die Werkzeuge bearbeitet, die in der Werkzeugaufnahme des zweiten Spindelstocks sitzen und danach dem Spannfutter der zweiten Werkstückspindel übergeben. In der zweiten Werkstückspindel wird dann die zweite Seite des Werkstücks durch die am ersten Spindelstock vorgesehenen Werkzeuge bearbeitet und nach dem Schwenken der zweiten Werkstückspindel in die vertikale Lage auf einer Werkstückauflagefläche abgelegt.

Da jeder Spindelstock sowohl eine Werkstückspindel als auch Werkzeuge trägt, und während der Bearbeitung jeweils beide Spindelstöcke am Bearbeitungsvorgang beteiligt sind, kann während der Bearbeitungszeit immer nur ein Werkstück bearbeitet werden, und während dieser Zeit kann auch kein anderes Werkstück gehandhabt werden. Die Zeit von der Aufnahme eines Ausgangswerkstücks bis zur Ablage eines vollständig bearbeiteten Werkstücks ist deshalb vergleichsweise lang und der Durchsatz derartiger Drehmaschinen eher niedrig.

Aus den genannten Gründen besteht daher schon länger das Bestreben Drehmaschinen bereitzustellen, bei denen Bearbeitungsvorgänge und Handhabungsvorgänge einander zeitlich überlappen können.

Hierzu lehrt beispielsweise die DE 199 04 859 A1 eine Drehmaschine mit zwei an einem Maschinenbett in einer Richtung einer ersten, horizontalen Achse und in Richtung einer zweiten, vertikalen Achse verfahrbar gelagerten, mit Werkstückspannmitteln versehenen Werkstückspindeln, die jeweils um eine dritte Achse, die zu der durch die erste und die zweite Achse aufgespannten Ebene senkrecht ist, schwenkbar sind. Hierbei sind die Werkstückspindeln so ausgebildet, dass ihre Drehachsen während der Übergabe eines Werkstücks von der einen Werkstückspindel zur anderen fluchten. Ferner sind unterhalb der mit den Werkstückspindeln vertikal nach unten schwenkbaren Werkstückspannmittel horizontale Auflagen für Werkstücke vorgesehen, wobei die Werkstückspindeln zur Bearbeitung der in den Werkstückspannmitteln gehaltenen Werkstücke bei vertikaler Rotationsachse in hängender Anordnung ausgebildet sind und eine Werkzeugaufnahme unterhalb der hängenden Werkstückspannmittel am Maschinenbett angeordnet ist.

Ferner beschreibt die DE 10 2004 004 019 B4 eine Drehmaschine umfassend eine erste an einem Maschinengestell angeordnete Werkstückspindel mit einer um eine erste Spindelachse drehbaren ersten Werkstückaufnahme und eine zweite am Maschinengestell angeordnete Werkstückspindel mit einer um eine zweite Spindelachse drehbaren zweiten Werkstückaufnahme. In der beschriebenen Drehmaschine ist die zweite Werkstückspindel um eine quer zu der zweiten Spindelachse verlaufende Schwenkachse verschwenkbar, und zwar von einer Stellung, in welcher die zweite Spindelachse parallel oder koaxial zur ersten Spindelachse verläuft, in eine Stellung, in welcher die zweite Spindelachse quer zur ersten Spindelachse ausgerichtet ist.

Ferner beschrieben ist ein erster mit mindestens einem Werkzeug bestückter Werkzeugträger zur Bearbeitung eines in der ersten Werkstückspindel gehaltenen Werkstücks auf einer Seite, ein zweiter mit mindestens einem Werkzeug bestückter Werkzeugträger zur Bearbeitung eines in der zweiten Werkstückspindel gehaltenen Werkstücks auf einer anderen Seite. Die erste und die zweite Werkstückspindel mit einander zugewandten Werkstückaufnahmen sind zur direkten Übergabe des auf der einen Seite bearbeiteten Werkstücks von einer der Werkstückaufnahmen in die jeweils andere Werkstückaufnahme in eine Übergabestellung der Werkstückspindeln bewegbar. Hierbei sind die Spindelachsen koaxial zueinander ausgerichtet und in Richtung der Achsen bewegbar, wobei der ersten Werkstückspindel zum Laden des rohen Werkstücks eine Stangenzuführeinrichtung zugeordnet ist. Das fertig bearbeitete Werkstück kann von der zweiten Werkstückspindel mit quer zur ersten Spindelachse verlaufender zweiter Spindelachse einer Werkstückabfuhreinrichtung übergeben werden.

Die geschilderte Drehmaschine ist jedoch mit dem Problem behaftet, dass bei der Abgabe des Werkstücks durch die zweite Werkstückspindel an die nachgeschaltete Werkstückabfuhreinrichtung das Werkstück lediglich ungenau auf der Werkstückabfuhreinrichtung, insbesondere einem Trägerelement der Werkstückabfuhreinrichtung, positioniert werden kann, wodurch die in der Drehmaschine vorhandenen Lage- und Ausrichtungsinformationen über das Werkstück bei der Übergabe an die Werkstückabfuhreinrichtung verloren gehen.

Ferner besteht schon länger das Bestreben, Werkzeugmaschinen, insbesondere Drehmaschinen, bereitzustellen, die an einem in einer Werkstückspindel aufgenommenen Werkstück schräge Werkstückbearbeitungen, wie zum Beispiel Bohrungen oder Fräsarbeiten, vornehmen können. Des Weiteren besteht der Bedarf, Werkzeugmaschinen bereitzustellen, die Fräsarbeiten durchführen können, welche größere Zerspankräfte benötigen als Werkzeuge an einem herkömmlichen Werkzeugrevolver bereitstellen können. Außerdem besteht das Bestreben, Werkzeugmaschinen, insbesondere Drehmaschinen, bereitzustellen, die in der Lage sind, Stangenmaterial mit besonders großer Länge und/oder besonders geringem Durchmesser zuverlässig, insbesondere mit hoher Bearbeitungsqualität / Bearbeitungsgüte, bearbeiten zu können.

Aufgrund der Tatsache, dass obig beschriebene Werkzeugmaschinen, insbesondere Werkzeugmaschinen mit einer oder mehreren schwenkbaren Werkstückspindeln, in der Anschaffung äußerst teuer sind, besteht das Bestreben, Werkzeugmaschinen zu schaffen, die sämtliche oben genannten Anforderungen in einer Werkzeugmaschine erfüllen.

### Gegenstand der Erfindung

Der Erfindung liegt die Aufgabe zu Grunde, eine Werkzeugmaschine bereitzustellen, die in der Lage ist, einerseits Bearbeitungsvorgänge und Handhabungsvorgänge einander zeitlich zu überlappen, um die Zeit von der Aufnahme eines Ausgangswerkstücks bis zur Ablage eines vollständig bearbeiteten Werkstücks zu minimieren, andererseits Schrägbearbeitungen an einem in einer Werkstückspindel aufgenommenen Werkstück mit hoher Präzision und hohem Freiheitsgrad durchzuführen. Ferner soll die bereitgestellte Werkzeugmaschine in der Lage sein, Fräsarbeiten mit hohen Zerspankräften durchführen zu können und die in der Werkzeugmaschine gewonnenen Lage- und Ausrichtungsinformationen über das bearbeitete Werkstück für nachgeschaltete Bearbeitungsschritte verfügbar zu machen und gleichzeitig eine kompakte und in sich steife Bauweise zu realisieren, um unnötige Schwingungen die das Bearbeitungsergebnis beeinträchtigen könnten zu vermeiden.

Diese Aufgabe wird gelöst durch eine Schwenkvorrichtung für eine Werkstückspindel einer Werkzeugmaschine, insbesondere einer Drehmaschine, nach Anspruch 1. Überdies stellt die Erfindung einen Werkzeugträger für eine Werkzeugmaschine, insbesondere eine Drehmaschine, nach Anspruch 10 und eine Werkzeugmaschine, insbesondere Drehmaschine, nach Anspruch 13 bereit. Ferner betrifft die vorliegende Erfindung ein Be- und Entladesystem für eine Werkzeugmaschine für die Zufuhr von zu bearbeitenden Werkstücken und/oder Abfuhr von durch die Werkzeugmaschine bearbeiteten Werkstücken.

Hierbei ist einer der Kerngedanken der vorliegenden Erfindung, eine Schwenkvorrichtung für eine Werkstückspindel einer Werkzeugmaschine bereitzustellen, bei welcher die Schwenkbewegung und/oder Drehbewegung durch einen Torquemotor oder einen Master-Slave Zahnradantrieb angetrieben wird, wodurch eine hohe Positionsgenauigkeit und ein hohes Antriebsmoment bzw. Haltemoment für die Schwenkvorrichtung bereitgestellt werden kann und die Werkstückspindel in jegliche gewünschte Winkelposition gebracht und in dieser fixiert werden kann.

Auf diese Weise kann eine Werkstückspindel bereitgestellt werden, welche eine schräge Werkstückbearbeitung eines in der Werkstückspindel aufgenommenen Werkstücks ermöglicht. Hierdurch können Sonderwerkzeuge vermieden und Bearbeitungen in Hinterschneidungen ohne Spezialwerkzeug durchgeführt werden. Aufgrund des bereitgestellten, sehr hohen Haltemoments durch den Torquemotor, ist eine mit der erfindungsgemäßen Schwenkvorrichtung ausgestattete Werkzeugmaschine in der Lage, Werkstückbearbeitungen, insbesondere Fräsarbeiten, mit äußerst großen Zerspankräften durchzuführen.

Gemäß einer Ausführungsform der vorliegenden Erfindung weist eine Schwenkvorrichtung für eine Werkstückspindel einer Werkzeugmaschine, insbesondere einer Drehmaschine, zur Bearbeitung eines Werkstücks, insbesondere von Stangenmaterial, das bevorzugt zumindest abschnittsweise aus Metall oder dergleichen ausgebildet ist, auf: ein Gehäuse zum Anbringen der Schwenkvorrichtung an einer Werkzeugmaschine, eine Trägervorrichtung zur Aufnahme einer Werkstückspindel der Werkzeugmaschine, die drehbar in dem Gehäuse gelagert ist, und einen am Gehäuse, insbesondere im Gehäuse, vorgesehenen Antrieb zum Antreiben einer Schwenk- und/oder Drehbewegung der Trägervorrichtung um eine Schwenkachse relativ zum Gehäuse, wobei der Antrieb ein Torquemotor oder ein Master-Slave Zahnradantrieb ist.

Hierdurch kann eine Sicherheitsachse mit Fixierung bereitgestellt werden, welche ein stufenloses schwenken einer Werkstückspindel um eine gewünschte Schwenkachse ermöglicht. Durch die Ausbildung des Schwenkabtriebs als ein Torquemotor und/oder Master-Slave Zahnradantrieb kann ein hohes Drehmoment bei gleichzeitigem hohen Haltemoment realisiert werden. Durch das stufenlose Schwenken der Werkstückspindel wird es ermöglicht, an dem in der Werkstückspindel aufgenommenen Werkstück Bearbeitungen, insbesondere spanende Bearbeitungen, in jeglicher Winkelstellung oder Schrägstellung auszuführen. Hierdurch können Sonderwerkzeuge vermieden und Bearbeitungen in Hinterschneidungen ohne Spezialwerkzeug durchgeführt werden. Ferner ermöglicht das bereitgestellte, hohe Haltemoment, Werkstückbearbeitungen, insbesondere Fräsarbeiten, mit äußerst großen Zerspankräften durchzuführen.

Ferner ist es vorteilhaft, wenn der Torquemotor ein Motor mit einem Haltemoment von mehr als 100 Nm ist und bevorzugt als ein Direktantrieb ausgebildet ist, und/oder der Antrieb dazu eingerichtet ist, einen Schrittwinkel von ± 50 Winkelsekunden, bevorzugt ± 10 Winkelsekunden, weiter bevorzugt ± 50 Winkelsekunden, zu realisieren.

Hierbei ist der Torquemotor bevorzugt als ein Synchronmotor mit einem maximalen Drehmoment im Bereich von 200 bis 400 Nm und einer Drehzahl im Bereich von 0 bis 5000 U/min ausgebildet.

Darüber hinaus besteht der Master-Slave Zahnradantrieb aus zwei Antrieben, einem Masterantrieb und einem Slaveantrieb, welche ebenfalls bevorzugt als Synchronmotoren ausgebildet sind, und beide über ein Zahngetriebe mit einer gemeinsamen Antriebswelle wirkverbunden sind. Hierzu weisen die beiden Antriebe jeweils ein Antriebsritzel auf, das mit einem Hauptzahnrad, das an der Antriebswelle befestigt ist, kämen. Durch die Ausbildung mit einem Master- und einem Slaveantrieb ist es möglich, den Antrieb spielfrei zu gestalten. Des Weiteren ist es aufgrund der Untersetzung des Motordrehmoments anhand des Zahnradgetriebes möglich, ein hohes Antriebs- und/oder Haltemoment zu realisieren.

Des Weiteren ist es bevorzugt, dass der die Trägervorrichtung eine Hohlwelle aufweist, welche als Antriebswelle des Torquemotors oder des Master-Slave Zahnradantriebs dient.

Weiterhin ist es vorteilhaft, wenn der Torquemotor als ein Mittendrehantrieb ausgebildet ist, so dass beide Enden einer/der Antriebswelle freiliegen, wobei bevorzugt die beiden Enden der Antriebswelle in dem Gehäuse drehbar gelagert sind.

Ferner ist es bevorzugt, dass die Trägervorrichtung einen Spindelträger aufweist, an dem die Werkstückspindel derart angebracht ist, dass eine Spindelachse einer Werkstückaufnahme, die um die Spindelachse drehbar ist, quer, insbesondere senkrecht, zur Schwenkachse ist.

Des Weiteren ist es vorteilhaft, dass die Werkstückspindel mittels einer Führungseinrichtung, insbesondere einem Schlittensystem, an dem Spindelträger parallel zur Spindelachse verschiebbar gelagert ist.

Gemäß einer weiteren Ausführungsform der vorliegenden Erfindung ist die Werkstückspindel mittels der Schwenkvorrichtung zumindest um einen Winkel von ± 50°, insbesondere zumindest um einen Winkel von ± 95°, um eine Ausgangsstellung dreh- oder schwenkbar, wobei bevorzugt die Ausgangsstellung eine Vertikalstellung der Werkstückspindel ist.

Es ist ebenfalls bevorzugt, dass die Schwenkvorrichtung eine Klemmeinrichtung aufweist, insbesondere eine Sicherheitsklemmeinrichtung, welche bevorzugt pneumatisch oder hydraulisch betätigbar ist. Hierbei ist unter Sicherheitsklemmeinrichtung zu verstehen, dass die Klemmeinrichtung in einem unbetätigten Zustand geschlossen, also in einem Klemmzustand ist, und erst durch ein Betätigen, insbesondere durch Anlegen eines pneumatischen oder hydraulischen Drucks, gelöst wird. Hierdurch kann sichergestellt werden, dass in einem Stör- oder Notfall die Schwenkachse geklemmt wird. Anhand der Klemmeinrichtung ist es möglich, die Schwenkvorrichtung, insbesondere die Werkstückspindel, stufenlos zu klemmen, wodurch eine Fixierung mit noch größerem Haltemoment realisiert wird.

Des Weiteren ist es vorteilhaft, wenn die Schwenkvorrichtung ein Messsystem, insbesondere ein Induktiv-Winkelmessgerät aufweist. Hierbei ist es bevorzugt, dass das Messsystem eine Messgenauigkeit von bis zu ± 1 Winkelsekunde aufweist. Auf diese Weise kann die Schwenkvorrichtung mit einer sehr hohen Winkelgenauigkeit positioniert und fixiert werden, wodurch an dem in der Schwenkvorrichtung, insbesondere in der Werkstückspindel, welche an der Schwenkvorrichtung befestigt ist, aufgenommenen Werkstück Bearbeitungen in jeglicher Winkelstellung vorgenommen werden können.

Darüber hinaus ist es bevorzugt, dass ein Hauptlager des Torquemotors, welches bevorzugt an der der Trägervorrichtung zugewandten Seite der Antriebswelle angeordnet ist, als ein Axial-Radiallager, insbesondere ein YRTC-Lager, ausgebildet ist.

Des Weiteren ist es bevorzugt, dass das Messsystem in der Nähe des Hauptlagers ausgebildet ist, wodurch mögliche Winkelfehler infolge von Torsionsbeanspruchungen der Antriebswelle reduziert werden können.

Ferner betrifft die vorliegende Erfindung einen Werkzeugträger für eine Werkzeugmaschine, insbesondere einer Drehmaschine, weiter bevorzugt die nachstehend beschriebene Werkzeugmaschine gemäß der vorliegenden Erfindung, zur Bearbeitung eines Werkstücks, insbesondere von Stangenmaterial, das bevorzugt zumindest abschnittsweise aus Metall oder dergleichen ausgebildet ist, aufweisend: einen Revolverkopf umfassend eine Vielzahl von Werkzeugaufnahmen zur Aufnahme von Werkzeugen und eine Lünette, die dazu eingerichtet ist, Werkstücke, die in einer mit dem Werkzeugträger versehenen Werkzeugmaschine bearbeitet werden, abzustützen.

Auf diese Weise kann ein Werkzeugträger bereitgestellt werden, welcher es einer Werkzeugmaschine, in welcher er vorgesehen bzw. installiert ist, ermöglicht, Werkstücke, die in einer oder in zwei Werkstückspindeln, insbesondere deren Werkstückaufnahmen, aufgenommen sind, zusätzlich abzustützen. Hierdurch wird es ermöglicht, längere Werkstücke bzw. Werkstücke mit geringerem Durchmesser spanend zu bearbeiten, ohne aufgrund von unerwünschten Verlagerungen des Werkstücks während der Bearbeitung die Bearbeitungsqualität zu mindern.

Ferner ist es bevorzugt, dass der Werkzeugträger eine Führungseinrichtung, insbesondere ein Schlittensystem, mittels welcher der Revolverkopf parallel zu einer Drehachse des Revolverkopfs verfahrbar ist und/oder eine weitere Führungseinrichtung, insbesondere Schlittensystem, mittels welcher der Revolverkopf quer, insbesondere senkrecht, zu der Drehachse des Revolverkopfs verfahrbar ist, aufweist.

Weiterhin ist es vorteilhaft, wenn die Drehachse des Revolverkopfs parallel zu einer Drehachse eines durch die Lünette abstützbaren Werkstücks ist.

Des Weiteren betrifft die vorliegende Erfindung eine Werkzeugmaschine, insbesondere Drehmaschine, zur Bearbeitung eines Werkstücks, insbesondere von Stangenmaterial, das bevorzugt zumindest abschnittsweise aus Metall oder dergleichen ausgebildet ist, aufweisend: ein Maschinengestell, eine am Maschinengestell angeordnete Werkstückspindel mit einer um eine Spindelachse drehbaren Werkstückaufnahme, eine weitere am Maschinengestell angeordnete Werkstückspindel mit einer um eine weitere Spindelachse drehbaren weiteren Werkstückaufnahme, einen ersten mit mindestens einem Werkzeug bestückbaren Werkzeugträger zur Bearbeitung eines in der Werkstückspindel gehaltenen Werkstücks auf einer Seite, und eine Schwenkvorrichtung zum Schwenken und/oder Drehen der Werkstückspindel um eine Schwenkachse, die in etwa parallel zu einer Grundfläche, auf der das Maschinengestell aufgestellt ist, ausgerichtet ist, wobei die Werkstückspindel mittels der Schwenkvorrichtung, insbesondere der oben beschriebenen erfindungsgemäßen Schwenkvorrichtung, stufenlos um eine Ausgangsstellung dreh- oder schwenkbar ist.

Ferner ist es bevorzugt, dass die Werkstückspindel mittels der Schwenkvorrichtung zumindest um einen Winkel von ± 50°, insbesondere zumindest um einen Winkel von ± 95°, um eine Ausgangsstellung dreh- oder schwenkbar ist, wobei bevorzugt die Ausgangsstellung eine Vertikalstellung der Werkstückspindel ist.

Gemäß einer weiteren Ausführungsform der vorliegenden Erfindung ist die schwenkbare Werkstückspindel in Bearbeitungsflussrichtung vor oder hinter der weiteren Werkstückspindel angeordnet.

Des Weiteren ist es bevorzugt, dass die Werkzeugmaschine ferner einen zweiten mit mindestens einem Werkzeug bestückbaren Werkzeugträger zur Bearbeitung eines in der weiteren Werkstückspindel gehaltenen Werkstücks auf einer anderen Seite, insbesondere Rückseite, aufweist, wobei bevorzugt der erste Werkzeugträger und/oder der zweite Werkzeugträger der oben beschriebene erfindungsgemäße Werkzeugträger ist/sind.

Ferner ist es vorteilhaft, wenn die Werkzeugmaschine eine Fräs- und/oder Schleifeinrichtung mit einer Werkzeugspindel zur Fräs- und/oder Schleifbearbeitung eines in der Werkstückspindel und/oder in der weiteren Werkstückspindel gehaltenen Werkstücks aufweist.

Es ist ebenfalls bevorzugt, die Fräs- und/oder Schleifeinrichtung ferner eine Führungseinrichtung aufweist, insbesondere ein Schlittensystem, mittels welcher die Werkzeugspindel quer, insbesondere senkrecht, zu einer Spindelachse der Werkzeugspindel verfahrbar ist, wobei die Werkzeugspindel bevorzugt vertikal ausgerichtet ist und die Führungseinrichtung eine Bewegung parallel zur Schwenkachse der Schwenkvorrichtung in einer sogenannten Y-Richtung ermöglicht.

Weiterhin ist es vorteilhaft, wenn die Schwenkvorrichtung und/oder die Führungseinrichtung so eingerichtet sind, dass ein in der Werkstückspindel aufgenommenes Werkstück in einen Bearbeitungsbereich der Werkzeugspindel gebracht werden kann, wobei insbesondere die Spindelachse der Werkzeugspindel in eine schräge Ausrichtung in Bezug auf die Spindelachse der Werkzeugspindel bringbar ist.

Gemäß einer weiteren Ausführungsform weist der erste Werkzeugträger und/oder der zweite Werkzeugträger ferner eine Führungseinrichtung auf, insbesondere ein Schlittensystem, mittels welcher ein/der Revolverkopf des Werkzeugträgers quer, insbesondere senkrecht, zu der jeweiligen Spindelachse verfahrbar ist, wobei die Führungseinrichtung bevorzugt eine Bewegung parallel zur Schwenkachse der Schwenkvorrichtung in einer sogenannten Y-Richtung ermöglicht.

Des Weiteren ist es bevorzugt, dass die erste Werkstückspindel und/oder die zweite Werkstückspindel als ein Direktantrieb mit einer Hohlwelle ausgebildet ist/sind, bei dem das unbearbeitete Werkstück bevorzugt durch eine Hohlwelle des Direktantriebs zu der Werkstückaufnahme zuführbar ist.

Ferner ist es vorteilhaft, dass der ersten Werkstückspindel und/oder der zweiten Werkstückspindel eine Stangenzuführeinrichtung, insbesondere ein Stangenlader, zugeordnet ist, mit welcher eine Werkstoffstange durch die Hohlwelle des Direktantriebs der Werkstückaufnahme zuführbar ist.

Weiterhin ist es bevorzugt, dass die Werkzeugmaschine eine weitere Führungseinrichtung, insbesondere Schlittensystem, aufweist, auf der die Schwenkvorrichtung sitzt und anhand der die Schwenkvorrichtung quer, insbesondere senkrecht, zu der Schwenkachse verfahrbar ist, insbesondere eine Bewegung in einer sogenannten X-Richtung ermöglicht ist.

Des Weiteren ist es vorteilhaft, wenn die Werkzeugmaschine eine weitere Führungseinrichtung, insbesondere Schlittensystem, aufweist, auf welcher der zweite Werkzeugträger sitzt und parallel zu der Spindelachse der zweiten Werkstückspindel verfahrbar ist, wobei bevorzugt die Führungseinrichtung der Schwenkreinrichtung und die Führungseinrichtung des zweiten Werkzeugträgers gemeinsame Führungsschienen verwenden.

Gemäß einer weiteren Ausführungsform weist die Werkzeugmaschine ein Be- und/oder Entladesystem auf, wobei das Be- und Entladesystem zumindest ein Handling-System, ein Shuttle, ein Schlepprahmenband, ein Palettenband und/oder einen Roboter aufweist, und das Be- und/oder Entladesystem bevorzugt zur Beladung der Werkzeugmaschine mit Werkstoffstangen und/oder Halbzeugen und/oder Rohlingen und/oder zur Entladung von bearbeiteten Werkstücken bzw. teil bearbeiteten oder fertig bearbeiteten Werkstücken vorgesehen ist. Bevorzugt handelt es sich bei dem Be- und Entladesystem um das nachstehend beschriebene erfindungsgemäße Be- und/oder Entladesystem.

Ferner betrifft die vorliegende Erfindung ein Be- und/oder Entladesystem, aufweisend: zumindest ein Handling-System, ein Shuttle, ein Schlepprahmenband, ein Palettenband und/oder einen Roboter, wobei das Be- und/oder Entladesystem bevorzugt zur Beladung der Werkzeugmaschine mit Werkstoffstangen und/oder Halbzeugen und/oder Rohlingen und/oder zur Entladung von bearbeiteten Werkstücken bzw. zum Teil bearbeiteten oder fertig bearbeiteten Werkstücken vorgesehen ist.

Des Weiteren ist es bevorzugt, dass das Handling-System des Be- und/oder Entladesystems eine erste Führungseinrichtung, insbesondere ein Schlittensystem, welche oberhalb eines Bearbeitungsraums der Werkzeugmaschine, insbesondere oberhalb der ersten Werkstückspindel und/oder der zweiten Werkstückspindel der Werkzeugmaschine horizontal, insbesondere in einer sogenannten X-Richtung, verlaufend angeordnet ist, eine Greifeinrichtung, die dazu eingerichtet ist, ein durch die erste Werkstückspindel und/oder die zweite Werkstückspindel bearbeitetes und/oder zu bearbeitendes Werkstück zu greifen, und eine zweite Führungseinrichtung, insbesondere ein Schlittensystem, welche auf der ersten Führungseinrichtung sitzt und die Greifeinrichtung trägt, wobei die Greifeinrichtung quer, insbesondere senkrecht, zu der X-Richtung der ersten Führungseinrichtung verfahrbar ist, insbesondere eine Bewegung vertikal in einer sogenannten Z-Richtung ermöglicht ist, aufweist.

Weiterhin ist es bevorzugt, dass die Greifeinrichtung eine Greifer-Schwenkvorrichtung aufweist, anhand welcher der Greifer um eine horizontale Schwenkachse schwenkbar ist, insbesondere um einen Winkel von ± 90 Grad schwenkbar ist.

Ferner ist es bevorzugt, dass das Schlepprahmenband, für die Zufuhr/Abfuhr von Werkstücken an/von einer/der Werkzeugmaschine, aufweisend einen Kettentrieb mit umlaufender Kette für den Transport einer Vielzahl von Schlepprahmen, die auf einer Oberseite des Schlepprahmenbands endlos umlaufen, und einen Hubtisch, der dazu eingerichtet ist, in einer Ablage/Aufnahmerichtung der zu transportierenden Werkstücke, die senkrecht zu einer Grundfläche ist, auf der das Schlepprahmenband steht, beweglich gelagert zu sein.

Des Weiteren ist es vorteilhaft, wenn der Hubtisch einen beweglichen Körper und eine fest mit dem Schlepprahmenband verbundene Grundplatte aufweist, wobei der bewegliche Körper über zumindest zwei Andruckfedern, bevorzugt vier Andruckfedern, die an der Grundplatte befestigt sind, gegen einstellbare Anschlagschrauben, bevorzugt vier Senkschrauben, die als Anschlag für den beweglichen Körper dienen, gedrückt wird, wodurch der bewegliche Körper in einer oberen Position positionierbar und fixierbar ist.

Gemäß einer Ausführungsform der vorliegender Erfindung weist eine Bodenplatte des beweglichen Körpers vier Bohrungen, insbesondere Senkbohrungen, auf, durch welche die einstellbaren Anschlagschrauben hindurchstehen, wodurch der bewegliche Körper quer zu seiner Bewegungsrichtung, welche der Ablage/Aufnahmerichtung der Werkstücke entspricht, geführt ist.

Des Weiteren ist es bevorzugt, dass der Hubtisch so eingerichtet ist, dass eine Werkstückauflagefläche des Hubtischs, die eine Oberseite des beweglichen Körpers ist, in etwa eben zu der Oberseite des Schlepprahmenbands ausrichtbar ist, wobei die Ausrichtung anhand der einstellbaren Anschlagschrauben vornehmbar ist.

Weiterhin ist es vorteilhaft, wenn der Hubtisch eine Andrücküberwachung aufweist, mittels welcher ein Andrückweg, der in Richtung der Bewegungsrichtung des beweglichen Körpers verläuft, überwacht werden kann, bevorzugt erfolgt die Überwachung mittels zweier Hall-Sensoren.

### Kurze Beschreibung der Figuren

Fig. 1 zeigt eine schematische perspektivische Ansicht einer Drehmaschine gemäß dem Stand der Technik,
Fig. 2 zeigt eine schematische perspektivische Ansicht einer weiteren Drehmaschine gemäß dem Stand der Technik,
Fig. 3 zeigt eine schematische perspektivische Ansicht einer Werkzeugmaschine gemäß einer ersten Ausführungsform der vorliegenden Erfindung,
Fig. 4 zeigt eine schematische perspektivische Schnittansicht einer Schwenkvorrichtung gemäß einer Ausführungsform der vorliegenden Erfindung,
Fig. 5 zeigt eine schematische perspektivische Ansicht der Werkzeugmaschine gemäß der ersten Ausführungsform in dem Zustand, in dem die erste Werkstückspindel anhand der Schwenkvorrichtung in eine schräge Ausrichtung gebracht ist,
Fig. 6 zeigt eine schematische perspektivische Ansicht der Werkzeugmaschine gemäß der ersten Ausführungsform in dem Zustand, in dem das zum Teil bearbeitete Werkstück durch die erste Werkstückspindel an die zweite Werkstückspindel übergeben wird,
Fig. 7 zeigt eine schematische perspektivische Ansicht einer Werkzeugmaschine gemäß einer zweiten Ausführungsform der vorliegenden Erfindung in dem Zustand, in dem ein durch die erste und die zweite Werkstückspindel gehaltenes Werkstück durch eine Lünette eines Werkzeugträgers abgestützt ist,
Fig. 8 zeigt eine schematische perspektivische Ansicht einer Werkzeugmaschine einer dritten Ausführungsform der vorliegenden Erfindung in dem Zustand, in dem ein in der ersten Werkstückspindel aufgenommenes Werkstück anhand einer Fräs- und/oder Schleifeinrichtung bearbeitet wird,
Fig. 9 zeigt eine schematische perspektivische Ansicht einer Werkzeugmaschine einer vierten Ausführungsform der vorliegenden Erfindung in dem Zustand, in dem mittels eines Be- und/oder Entladesystems ein in der zweiten Werkstückspindel aufgenommenes Werkstück entnommen wird,
Fig. 10 zeigt eine schematische perspektivische Ansicht des in Fig. 9 dargestellten Be- und/oder Entladesystems in dem Zustand, in dem das entnommene Werkstück auf einem Schlepprahmenband abgelegt wird,
Fig. 11 zeigt eine schematische perspektivische Ansicht einer weiteren Ausführungsform des Be- und Entladesystems in dem Zustand, in dem die Werkzeugmaschine mittels eines Shuttles mit zu bearbeitenden Werkstücken beladen wird, und
Fig. 12 zeigt eine schematische perspektivische Ansicht einer alternativen Ausführungsform des Be- und Entladesystems in dem Zustand, in dem die Werkzeugmaschine mittels eines Schlepprahmenbands mit zu bearbeitenden Werkstücken beladen wird.

### Detaillierte Beschreibung bevorzugter Ausführungsformen

Nachfolgend werden anhand der beigefügten Figuren bevorzugte Ausführungsformen der vorliegenden Erfindung im Detail beschrieben. Weitere in diesem Zusammenhang genannte Modifikationen bestimmter Merkmale können jeweils einzeln miteinander kombiniert werden, um weitere Ausführungsformen auszubilden.

Dabei sind in den verschiedenen Figuren gleiche oder entsprechende Elemente jeweils mit den gleichen oder ähnlichen Bezugszeichen bezeichnet.

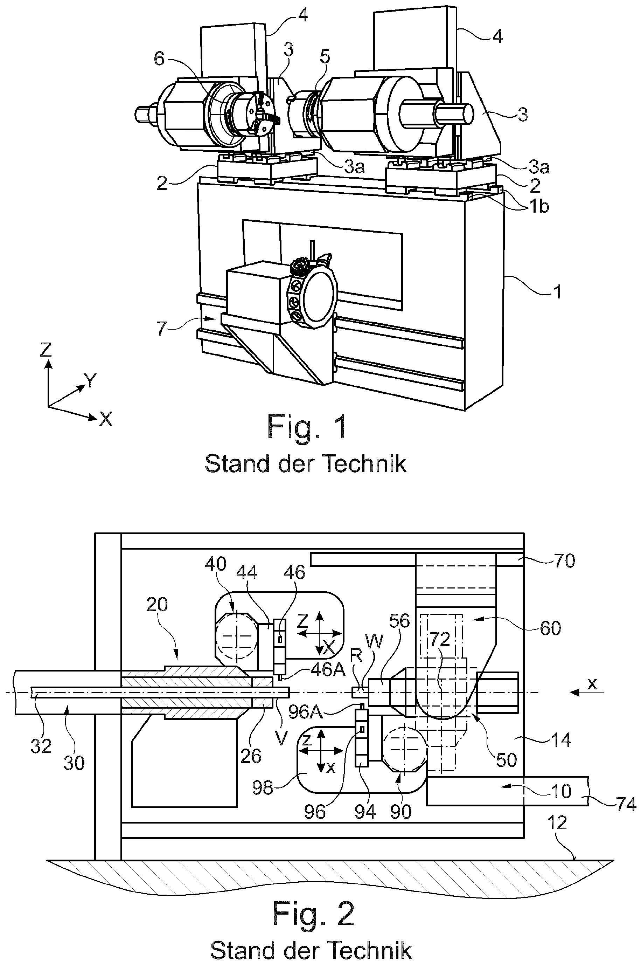

Fig. 1 zeigt eine schematische perspektivische Ansicht einer Drehmaschine gemäß dem Stand der Technik. Die in Fig. 1 dargestellte Drehmaschine weist ein Maschinenbett 1 und zwei Werkstückspindeln 5 und 6 auf. An der vertikalen Frontseite des Maschinenbetts 1 sind zwei zueinander parallele Leisten vorgesehen, auf denen eine Werkzeugaufnahme 7 ausgerichtet werden kann. Das Maschinenbett 1 ist als Rahmen ausgebildet, der an seiner Oberseite Bettführungen 1b trägt. Auf den Bettführungen 1b sind zwei Bettschlitten 2 mittels Führungsschuhen horizontal verschieblich vorgesehen. Die Bettschlitten 2 tragen Planschlitten 3, an denen wiederum Längsschlitten 4 geführt sind. An den Längsschlitten 4 sind Schwenkaufnahmen 5d und 6d verschwenkbar befestigt, die jeweils eine als integrierte Motorspindel ausgebildete Werkstückspindel 5 und 6 tragen.

Fig. 2 zeigt eine schematische perspektivische Ansicht einer weiteren Drehmaschine gemäß dem Stand der Technik. Die dargestellte Drehmaschine umfasst ein als Ganzes mit 10 bezeichnetes Maschinengestell, welches sich über einer Grundfläche 12 erhebt und ein Maschinenbett 14 aufweist, an welchem eine erste Werkstückspindel 20 gehalten ist, welche ein erste Werkstückaufnahme 26 aufweist. Der ersten Werkstückspindel 20 ist eine Stangenzuführeinrichtung 30 zugeordnet, mit welcher eine Werkstoffstange 32 durch eine Hohlwelle eines Spindelmotors 24 der Werkstückspindel 20 der ersten Werkstückaufnahme 26 zuführbar ist. Zur Bearbeitung der aufgenommenen Werkstoffstange 32 ist der ersten Werkstückspindel 20 ein erster Werkzeugträger 40 zugeordnet, welcher einen drehbaren Revolverkopf 44 umfasst, in welchem eine Vielzahl von ersten Werkzeugen 46 angeordnet ist.

Die Relativbewegung zwischen dem ersten Werkzeug 46A und dem Werkstück WR ist beispielsweise dadurch erreichbar, dass der erste Werkzeugträger 40 auf einem Schlittensystem sitzt, welches gegenüber dem Maschinenbett 14 parallel zur ersten Spindelachse 28 in einer Z-Richtung und senkrecht zur ersten Spindelachse in einer X-Richtung bewegbar ist.

Auf dem Maschinenbett 14 ist ferner eine zweite Werkstückspindel 50 angeordnet, welche ebenfalls eine zweite Werkstückaufnahme 56 aufweist. Die zweite Werkstückaufnahme 56 dient dabei dazu, das in der ersten Werkstückspindel 20 auf seiner Vorderseite V bearbeitete Werkstück W mit der Vorderseite V aufzunehmen und auf seiner Rückseite R zu bearbeiten.

Zum Übernehmen des auf der Vorderseite V bearbeiten Werkstücks W von der ersten Werkstückspindel 20 ist die zweite Werkstückspindel 50 koaxial zur ersten Werkstückspindel 20 ausrichtbar und in Richtung der ersten Werkstückspindel 20 bewegbar.

Hierzu ist die zweite Werkstückspindel 50 in einem als Ganzes mit 60 bezeichneten zweiten Spindelträger gehalten, welcher über Längsführungen 68, 70 parallel zur Z-Richtung verschiebbar ist. Die zweite Werkstückspindel 50 ist ferner in dem zweiten Spindelträger 60 um eine Schwenkachse 72 schwenkbar, welche senkrecht zu einer Bewegungsebene E verläuft, die durch die beiden Richtungen X und Z aufgespannt ist. Dadurch ist die zweite Werkstückspindel 50 von einer zur ersten Werkstückspindel 20 koaxialen Stellung in eine in Fig. 2 strichpunktiert dargestellte Stellung verschwenkbar, in welcher die zweite Werkstückaufnahme 56 der Grundfläche 12 zugewandt ist.

Die in Fig. 2 strichpunktiert dargestellte Stellung der zweiten Werkstückspindel 50 entspricht dabei einer Entladestellung, in welcher die Möglichkeit besteht, das auf der Rückseite R bearbeitete Werkstück W einer Werkstückabfuhreinrichtung 74 zu übergeben.

Zur Bearbeitung des Werkstücks W auf der Rückseite R in der zweiten Werkstückspindel 50 ist ein zweiter Werkzeugträger 90 vorgesehen, welcher einen Revolverkopf 94 aufweist, an welchem zweite Werkzeuge 96 angeordnet sind. Der zweite Werkzeugträger 90 ist ebenfalls auf einem zweiten Schlittensystem 98 angeordnet, welches in der Z-Richtung und in der X-Richtung bewegbar ist.

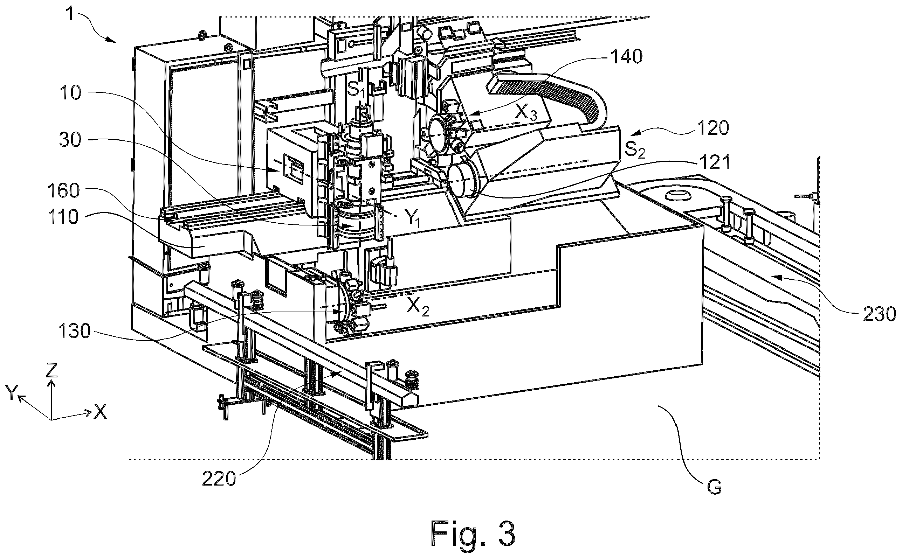

Fig. 3 zeigt eine schematische perspektivische Ansicht einer Werkzeugmaschine gemäß einer ersten Ausführungsform der vorliegenden Erfindung. Die dargestellte Werkzeugmaschine 1 weist ein Maschinengestell 110, eine am Maschinengestell 110 angeordnete Werkstückspindel 30 mit einer um eine Spindelachse S₁ drehbaren Werkstückaufnahme 31 auf. In der dargestellten Ausführungsform ist der Antrieb der Werkstückspindel 30 als ein Direktantrieb ausgebildet. Die Werkzeugmaschine 1 weist eine weitere am Maschinengestell 110 angeordnete Werkstückspindel 120 mit einer um eine weitere Spindelachse S₂ drehbaren weiteren Werkstückaufnahme 121 auf. In der dargestellten Ausführungsform ist die Bearbeitungsflussrichtung in Blickrichtung der Fig. 3 von links nach rechts. Für die Zufuhr der zu bearbeitenden Werkstücke W weist die Werkzeugmaschine 1 auf der linken Seite in Fig. 3 ein Shuttle 220 auf, mittels dessen automatisch zu bearbeitende Werkstücke W, insbesondere Werkstoffstangen und/oder Halbzeuge, der Werkzeugmaschine 1 zugeführt werden. An der rechten Seite der Werkzeugmaschine 1, d.h. in Bearbeitungsflussrichtung der Werkzeugmaschine 1 nachgeordnet, ist ein Schlepprahmenband 230 zur Abfuhr von durch die Werkzeugmaschine 1 bearbeitete Werkstücke W vorgesehen.

Die in Fig. 3 dargestellte Werkzeugmaschine 1 weist ferner eine erfindungsgemäße Schwenkvorrichtung 10 auf, die dazu vorgesehen ist, die erste Werkstückspindel 30 drehbar bzw. schwenkbar zu lagern, wobei die Werkstückspindel 30 insbesondere um eine Schwenkachse Y₁ relativ zu einem Gehäuse 1 der Schwenkvorrichtung 10 schwenkbar ist, wobei die Schwenkachse Y₁ parallel zu einer Grundfläche G, auf der die Werkzeugmaschine 1 aufgestellt ist, angeordnet ist. Entsprechend ist die Werkstückspindel 30 in der Fig. 3 gesehen horizontal schwenkbar.

Wie der Fig. 3 weiter entnommen werden kann, weist die Werkzeugmaschine 1 einen ersten mit mindestens einem Werkzeug bestückbaren Werkzeugträger 130 zur Bearbeitung eines in der Werkstückspindel 30 gehaltenen Werkstücks W auf einer Seite V, insbesondere auf einer Vorderseite des Werkstücks W, und einen zweiten mit mindestens einem Werkzeug bestückbaren Werkzeugträger 140 zur Bearbeitung eines in der weiteren Werkstückspindel 120 gehaltenen Werkstücks W auf einer anderen Seite R, insbesondere auf einer Rückseite des Werkstücks W. In der dargestellten Ausführungsform ist die erste, schwenkbare Werkstückspindel 30 zusammen mit dem dazugehörigen Werkzeugträger 130 in Bearbeitungsflussrichtung vor der weiteren Werkstückspindel 120 mit dem dazugehörigen Werkzeugträger 140 angeordnet. Es besteht jedoch auch die Möglichkeit, die schwenkbare Werkzeugspindel in Bearbeitungsflussrichtung hinter einer stationären nicht schwenkbaren Werkstückspindel anzuordnen. Ferner besteht auch die Möglichkeit, beide Werkstückspindeln 30, 120 anhand einer Schwenkvorrichtung 30 schwenkbar zu gestallten.

Um die nachfolgende Beschreibung, insbesondere in Bezug auf Richtungen und Achsen verständlicher zu machen, ist in der Fig. 3 ferner ein X-Y-Z Koordinatensystem angegeben, wobei die X-Richtung in Fig. 3 einer horizontalen Richtung in Bearbeitungsflussrichtung entspricht, die Y-Richtung einer Tiefenrichtung (in Blickrichtung) entspricht, und die Z-Richtung einer vertikalen Richtung von unten nach oben in Fig. 3 entspricht.

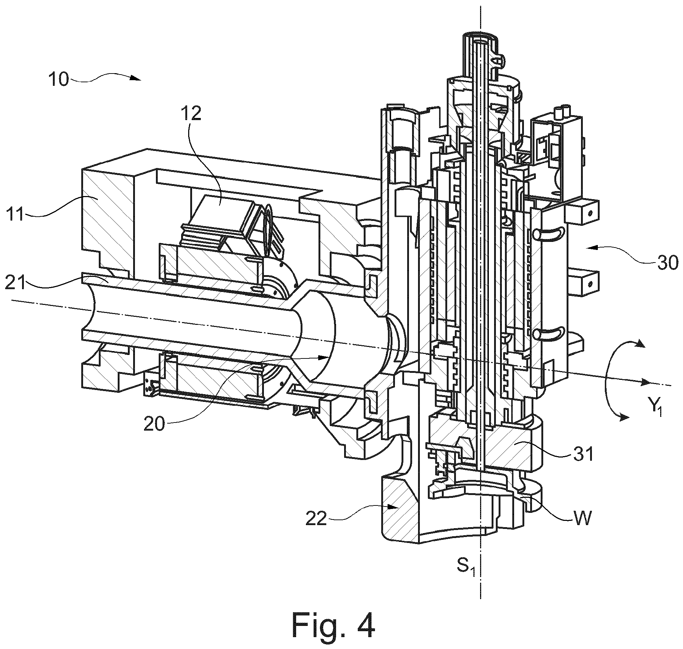

Fig. 4 zeigt eine schematische perspektivische Schnittansicht einer Schwenkvorrichtung gemäß einer Ausführungsform der vorliegenden Erfindung. Die dargestellte Schwenkvorrichtung 10 weist ein Gehäuse 11 zum Anbringen bzw. Befestigen der Schwenkvorrichtung 10 an einer Werkzeugmaschine 1, wobei wie der Fig. 3 entnommen werden kann, das Gehäuse 11 mittels einer Führungseinrichtung 160 der Schwenkvorrichtung 10 an der Werkzeugmaschine 1 bewegbar angebracht sein kann, insbesondere horizontal beweglich angebracht sein kann.

Wie der Fig. 4 weiter entnommen werden kann, weist die Schwenkvorrichtung 10 eine Trägervorrichtung 20 zur Aufnahme der Werkstückspindel 30 der Werkzeugmaschine 1 auf, die drehbar in oder an dem Gehäuse 11 gelagert ist, womit die Werkstückspindel 30 dreh- oder schwenkbar gelagert ist. In der dargestellten Ausführungsform ist der Antrieb 12 der Schwenk- und/oder Drehbewegung der Trägervorrichtung 20 und somit der Werkstückspindel 30 als Direktantrieb ausgebildet, welcher in dem Gehäuse 11 vorgesehen ist. Hierbei ist der Dreh- und/oder Schwenkantrieb 12 als ein Torquemotor in Hohlwellenausführung ausgebildet, welcher direkt auf einer Hohlwelle 21 der Trägervorrichtung 20 sitzt, welche als Antriebswelle des Torquemotors dient. Die Hohlwelle 21 der Trägervorrichtung 20 ist in dem Gehäuse 11 zweimal gelagert und zwischen den zwei Lagerstellen, welche an zwei sich gegenüberliegenden Enden des Gehäuses 11 angeordnet sind, ist der Torquemotor vorgesehen. Mittels der dargestellten Schwenkvorrichtung 10 ist die Werkstückspindel 30 um die bereits vorher genannte Schwenkachse Y₁ dreh- und/oder schwenkbar.

Bei der gezeigten Schwenkvorrichtung 10 weist die Trägervorrichtung 20 ferner einen Spindelträger 22 auf, an dem die Werkstückspindel 30 derart angebracht ist, dass die Spindelachse S₁ der Werkstückaufnahme 31, die um die Spindelachse S₁ drehbar antreibbar ist, senkrecht zur Schwenkachse Y₁ ist. In den Fig. 3 und 4 ist die Spindelachse S₁ vertikal ausgerichtet, was einer Ausgangsstellung entspricht, in welcher Hauptbearbeitungen an dem in der Werkstückaufnahme 31 aufgenommenen Werkstück vorgenommen werden können. Hier werden unter "Hauptbearbeitungen" Bearbeitungen, insbesondere spanende Bearbeitungen, verstanden, die ohne eine Schrägstellung der Werkstückspindel 30 vorgenommen werden.

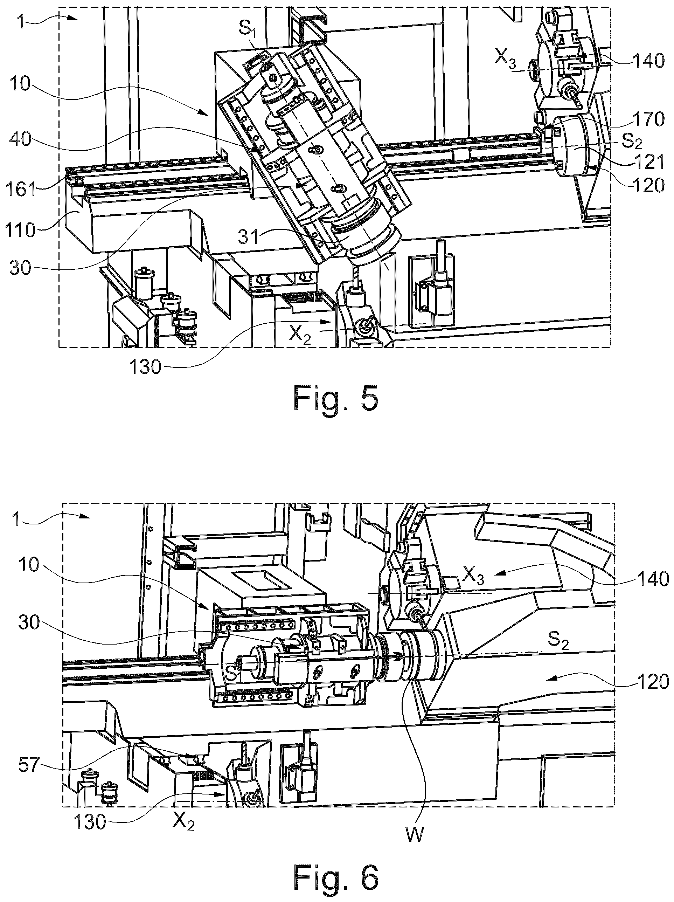

Fig. 5 zeigt eine schematische perspektivische Ansicht der Werkzeugmaschine 1 gemäß der ersten Ausführungsform in dem Zustand, in dem die erste Werkstückspindel 30 anhand der Schwenkvorrichtung 10 in eine schräge Ausrichtung gebracht ist, insbesondere in Fig. 5 gesehen in eine nach unten rechts ausgerichtet Stellung. Aufgrund der nach unten ausgerichteten Stellung kann das in der Werkstückaufnahme 31 aufgenommene Werkstück W von einem Werkzeug, das in dem unter der Schwenkvorrichtung 10 oder unter der Werkstückspindel 30 angeordneten Werkzeugträger 50, 130 aufgenommen ist, bearbeitet werden. Hierdurch ist eine schräge Werkstückbearbeitung des in der Werkstückspindel 30 aufgenommenen Werkstücks W möglich. In dem in Fig. 5 dargestellten Zustand wird eine schräge Bohrung an dem Werkstück W vorgesehen. Es können hier unter anderem Bohr-, Dreh-, Fräs- und Schleifbearbeitungen an dem Werkstück W durchgeführt werden.

In der gezeigten Ausführungsform ist die Schenkvorrichtung 10 ferner mit einer Führungseinrichtung 40, insbesondere einem Schlittensystem, versehen, mittels der die Werkstückspindel 30 verschiebbar bzw. verlagerbar an dem Spindelträger 22 angebracht ist. Auf diese Weise ist die Werkstückspindel 30 zusätzlich zu der Dreh- und/oder Schwenkbewegung parallel zur Spindelachse S₁ der Werkstückspindel 30 verschiebbar und kann somit in einen Bearbeitungsbereich des ersten Werkzeugträgers 50, 130 gebracht werden.

Fig. 6 zeigt eine schematische perspektivische Ansicht der Werkzeugmaschine 1 gemäß der ersten Ausführungsform in dem Zustand, in dem das zum Teil bearbeitete Werkstück W durch die erste Werkstückspindel 30 an die zweite Werkstückspindel 120 übergeben wird, um eine Bearbeitung der Rückseite des Werkstücks W zu ermöglichen. Auf diese Weise kann einerseits eine Umspannung des Werkstücks W durchgeführt werden, andererseits kann ein unnötiger Werkzeugwechsel in den jeweiligen Werkzeugträgern 50, 130, 140 gegebenenfalls vermieden werden. In dem in Fig. 6 gezeigten Zustand kann die Zustellung der Werkzeugspindel 30 zu der Werkzeugspindel 120 zur Werkstückübergabe anhand der Führungseinrichtung 160 der Schwenkvorrichtung 10 und/oder der Führungseinrichtung 40 des Spindelträgers 22 erfolgen. Wie in diesem Zusammenhang der Fig. 5 entnommen werden kann, teilen sich die Führungseinrichtung 160 der Schwenkvorrichtung 10 und die Führungseinrichtung 170 des zweiten Werkzeugträgers 140 die gleichen Führungsschienen 161, welche auf dem Maschinengestell 110 befestigt sind.

Wie der Fig. 6 weiter entnommen werden kann, weisen die beiden Werkzeugträger 130, 140 jeweils einen Revolverkopf umfassend eine Vielzahl von Werkzeugaufnahmen zur Aufnahme von Werkzeugen auf, die jeweils um eine horizontale Drehachse X₂, X₃ drehbar angetrieben werden können. In der dargestellten Ausführungsform ist der erste Werkzeugträger 50, 130 unterhalb der ersten Werkstückspindel 30 angeordnet und der zweite Werkzeugträger 140 ist oberhalb der zweiten Werkstückspindel 120 angeordnet.

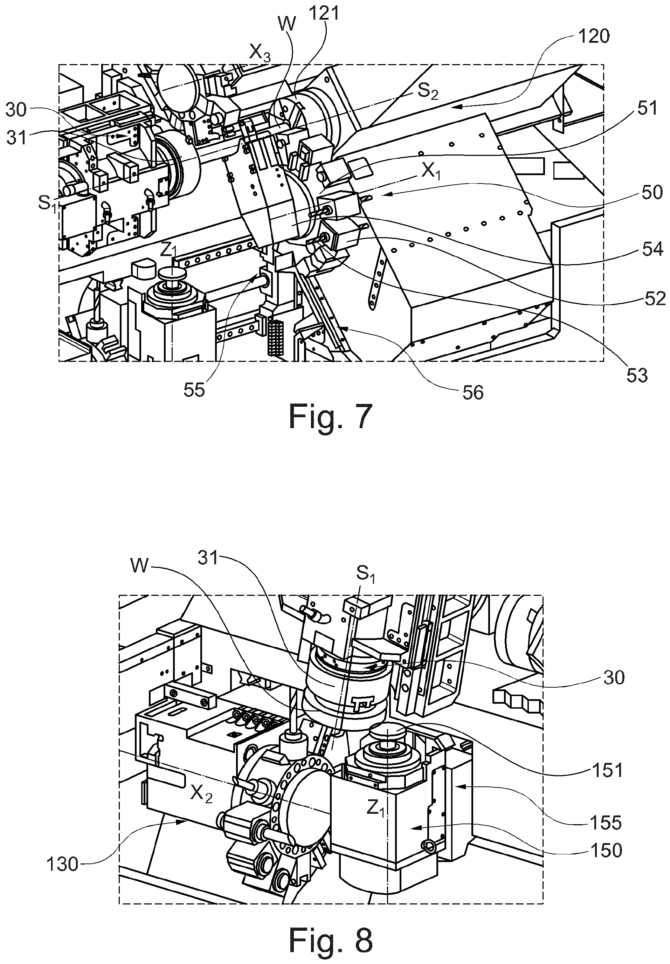

Fig. 7 zeigt eine schematische perspektivische Ansicht einer Werkzeugmaschine 1 gemäß einer zweiten Ausführungsform der vorliegenden Erfindung in dem Zustand, in dem ein durch die erste und die zweite Werkstückspindel 30, 120 gehaltenes Werkstück W durch eine Lünette 54 eines in diesem Fall weiteren Werkzeugträgers 50 abgestützt ist. Es besteht auch die Möglichkeit, den ersten Werkzeugträger 130 und/oder den zweiten Werkzeugträger 140 anstatt eines weiteren Werkzeugträgers 50 als Werkzeugträger 50 mit Lünette 54 auszubilden. Wie der Fig. 7 entnommen werden kann, weist ebenfalls der weitere Werkzeugträger 50 einen Revolverkopf 51 umfassend eine Vielzahl von Werkzeugaufnahmen 52 zur Aufnahme von Werkzeugen 53 auf. Ferner sitzt auf dem Revolverkopf 51 eine Lünette 54, die dazu eingerichtet ist, das in den beiden Werkstückspindeln 30, 120 aufgenommene Werkstück W abzustützen. Auf diese Weise wird es ermöglicht, dass durch den zweien Werkstückträger 140 eine Bearbeitung des Werkstücks W durchgeführt werden kann, während dieses durch die Lünette 54 abgestützt wird. Somit können längere Werkstücke W oder Werkstücke W mit geringerem Durchmesser bearbeitet werden, ohne dass durch den Krafteinfluss während der spanenden Bearbeitung die Bearbeitungsqualität verringert wird. Dies wird insbesondere durch die gegenüberliegende Anordnung der Lünette 54 und des zweiten Werkzeugträgers 140 erreicht.

Wie der Fig. 7 weiter entnommen werden kann, sitzt der weitere Werkzeugträger 50, womit die Werkzeugmaschine 1 gemäß dieser Ausführungsform drei Werkzeugträger 50, 130, 140 aufweist, unterhalb der zweiten, stationären Werkstückspindel 120. Es ist ferner dargestellt, dass der weitere Werkzeugträger eine Führungseinrichtung 55 aufweisen kann, die in der dargestellten Ausführungsform als ein Schlittensystem ausgebildet ist, mittels welcher der Revolverkopf 51 parallel zu der Drehachse X₁ des Revolverkopfs 51 verfahrbar ist. Auf diese Weise kann das in dem weiteren Werkzeugträger 50 aufgenommene Werkzeug oder die Lünette 54 entlang der Längserstreckung des Werkstücks W in X-Richtung verfahren werden. Ferner weist der weitere Werkzeugträger 50 eine weitere Führungseinrichtung 56 auf, die ebenfalls als ein Schlittensystem ausgebildet ist und anhand dessen der Revolverkopf 51 senkrecht zu der Drehachse X1 des Revolverkopfs 51 und somit senkrecht zu der Längserstreckung des Werkstücks W verfahrbar ist, insbesondere an das Werkstück W anstellbar ist. Entsprechend kann bei einer Bearbeitung des Werkstücks W durch ein Werkzeug 53 des Weiteren Werkzeugträgers 50 die weitere Führungseinrichtung 56 die Zustellbewegung durchführen.

Wie der Fig. 7 ebenfalls entnommen werden kann, ist die Drehachse X₁ des Revolverkopfs 51 parallel zu einer Drehachse S₁ - S₂ eines durch die Lünette 54 abstützbaren Werkstücks W ausgebildet.

Fig. 8 zeigt eine schematische perspektivische Ansicht einer Werkzeugmaschine 1 einer dritten Ausführungsform der vorliegenden Erfindung in dem Zustand, in dem ein in der ersten Werkstückspindel 30 aufgenommenes Werkstück W anhand einer Fräs- und/oder Schleifeinrichtung 150 bearbeitet wird. Hierzu weist die Fräs- und/oder Schleifeinrichtung 150 eine Werkzeugspindel 151 zur Fräs- und/oder Schleifbearbeitung auf. Es ist auch möglich, die Fräs- und/oder Schleifeinrichtung 150 so in der Werkzeugmaschine 1 anzuordnen, dass mittels der Fräs- und/oder Schleifeinrichtung 150 ein in der zweiten Werkstückspindel 120 aufgenommenes Werkstück W bearbeitet werden kann. In diesem Fall kann es gegebenenfalls auch durch Verfahren der ersten Werkstückspindel 30 möglich sein, dass mittels der einen Fräs- und/oder Schleifeinrichtung 150 Werkstücke, die in einer der beiden Werkstückspindeln 30, 120 aufgenommen sind, bearbeitet werden können.

Wie der Fig. 8 ebenfalls entnommen werden kann, weist die Fräs- und/oder Schleifeinrichtung 150 eine Führungseinrichtung 155 auf, die als ein Schlittensystem ausgebildet ist, mittels welcher die Werkzeugspindel 151 senkrecht zu einer Spindelachse Z₁ der Werkzeugspindel 151 verfahrbar ist, wobei die Werkzeugspindel 151 wie dargestellt bevorzugt vertikal ausgerichtet ist und die Führungseinrichtung 155 eine Bewegung parallel zur Schwenkachse Y₁ der Schwenkvorrichtung 10 in der Y-Richtung ermöglicht.

Der Fig. 8, sowie der Fig. 6, kann ferner entnommen werden, dass auch der erste und/oder zweite Werkzeugträger 130, 140 auf einer Führungseinrichtung 57, insbesondere Schlittensystem, sitzen können, welches eine Bewegung des jeweiligen Werkzeugträgers 130, 140 in der Y-Richtung ermöglicht.

Soll eine Bearbeitung des in der Werkstückspindel 30 aufgenommenen Werkstücks W durch die Fräs- und/oder Schleifeinrichtung durchgeführt werden, muss wie in Fig. 8 dargestellt ist, mit Hilfe der Schwenkvorrichtung 10, der Führungseinrichtung 40 des Spindelträgers 22 und der Führungseinrichtung 160 der Schwenkvorrichtung 10 das in der Werkstückspindel 30 aufgenommene Werkstück W in einen Bearbeitungsbereich der Werkzeugspindel 151 gebracht werden. Hier besteht ebenfalls die Möglichkeit, wie dargestellt, mittels der Schwenkvorrichtung 10 die Spindelachse S₁ der Werkstückspindel 30 in eine schräge Ausrichtung in Bezug auf die Spindelachse Z₁ der Werkzeugspindel 151 zu bringen, um eine schräge Werkstückbearbeitung durchführen zu können.

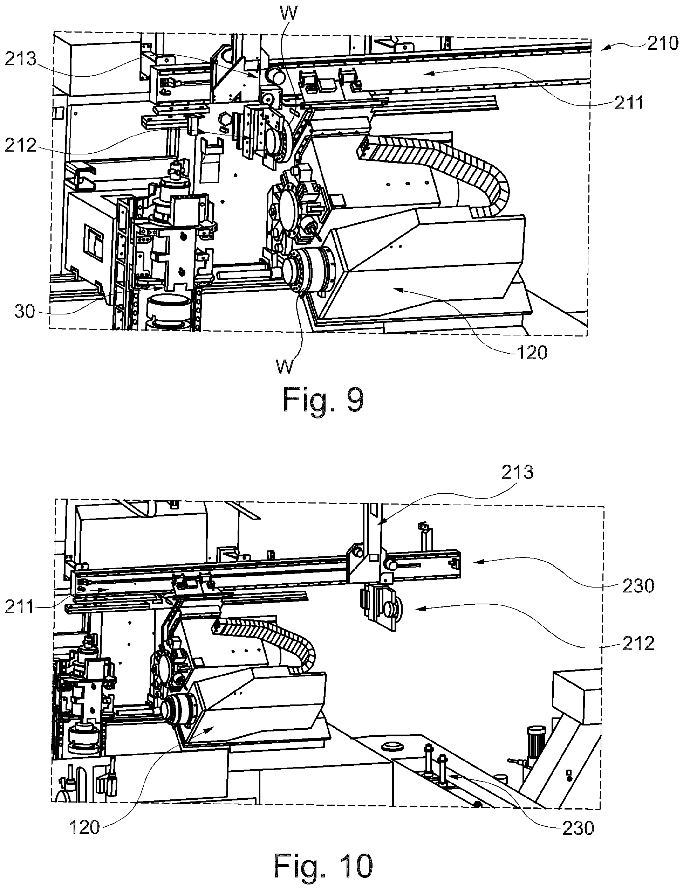

Fig. 9 zeigt eine schematische perspektivische Ansicht einer Werkzeugmaschine 1 einer vierten Ausführungsform der vorliegenden Erfindung in dem Zustand, in dem mittels eines Be- und/oder Entladesystems, insbesondere eines Handling-Systems 210, ein in der zweiten Werkstückspindel 120 aufgenommenes Werkstück W entnommen wird. Das dargestellte Handling-System 210 weist eine erste Führungseinrichtung 211 auf, das als ein Schlittensystem ausgebildet ist, welches oberhalb eines Bearbeitungsraums der Werkzeugmaschine 1, insbesondere oberhalb der ersten Werkstückspindel 30 und oberhalb der zweiten Werkstückspindel 120 horizontal in der X-Richtung verlaufend angeordnet ist. Ferner ist eine Greifeinrichtung 212 vorgesehen, die dazu eingerichtet ist, ein durch die erste Werkstückspindel 30 und/oder die zweite Werkstückspindel 120 bearbeitetes und/oder zu bearbeitendes Werkstück W zu greifen. Hierzu weist die Greifeinrichtung 212 eine Greifer-Schwenkvorrichtung, einen Greifer und Greifarme auf. Des Weiteren ist eine zweite Führungseinrichtung 213 vorgesehen, das ebenfalls beispielhaft als ein Schlittensystem ausgebildet ist, welches auf der ersten Führungseinrichtung 211 sitzt und die Greifeinrichtung 212 trägt. Hierbei ist die Greifeinrichtung 212 senkrecht zu der X-Richtung der ersten Führungseinrichtung 213 verfahrbar. D.h., anhand der ersten und zweiten Führungseinrichtung 211, 213 wird ein 2-Achsen-Portal geschaffen, welches eine Bewegung des Greifers in der Y-Richtung und Z-Richtung ermöglicht.

Fig. 10 zeigt eine schematische perspektivische Ansicht des in Fig. 9 dargestellten Be- und/oder Entladesystems in dem Zustand, in dem das entnommene Werkstück W auf einem Schlepprahmenband 230 abgelegt werden soll. In dem dargestellten Zustand wurde bereits das Werkstück W mittels der beiden Führungseinrichtungen 211, 213 aus dem Bearbeitungsbereich der Werkzeugmaschine 1 gebracht und oberhalb des Schlepprahmenbands 230 positioniert. In einem nächsten Schritt wird mittels der zweiten Führungseinrichtung 213 die Greifeinrichtung 212 senkrecht nach unten in Richtung Schlepprahmenband 230 bewegt, das aufgenommene Werkstück W anhand der Greifer-Schwenkvorrichtung um 90 Grad in eine horizontale Lage gebracht und dann auf dem Schlepprahmenband 230 abgelegt. Hierzu werden die Greifarme der Greifeinrichtung 212 geöffnet und das Werkstück W freigegeben.

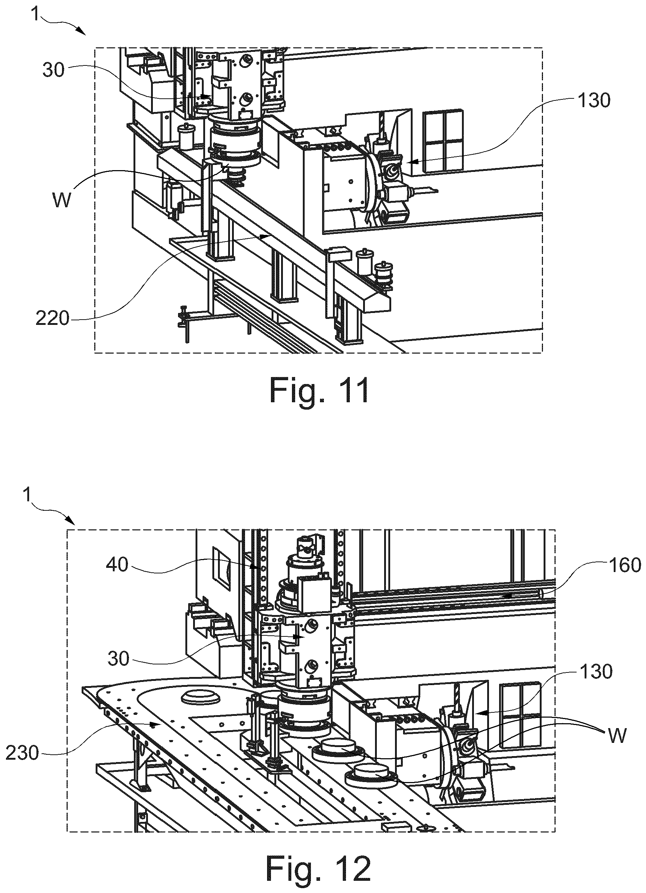

Fig. 11 zeigt eine schematische perspektivische Ansicht einer weiteren Ausführungsform des Be- und Entladesystems in dem Zustand, in dem die Werkzeugmaschine 1 mittels eines Shuttles 220 mit zu bearbeitenden Werkstücken W beladen wird. Wie der Fig. 11 entnommen werden kann, wird zur Entnahme des zu bearbeitenden Werkstücks aus dem Shuttle 220 die Werkstückspindel 30 in eine vertikale Ausrichtung, die Ausgangsstellung, gebracht und mittels der Führungseinrichtung 160 der Schwenkvorrichtung 30 und der Führungseinrichtung 40 des Spindelträgers 22 in eine Aufnahmeposition des Werkstücks W über dem Shuttle 220 gebracht werden.

Fig. 12 zeigt eine schematische perspektivische Ansicht einer alternativen Ausführungsform des Be- und Entladesystems in dem Zustand, in dem die Werkzeugmaschine 1 mittels eines Schlepprahmenbands 230 mit zu bearbeitenden Werkstücken W beladen wird.

Aus der vorhergehenden Beschreibung erkennt der Fachmann, dass verschiedene Modifikationen und Variationen der Vorrichtung der Erfindung durchgeführt werden können, ohne den Umfang der Erfindung zu verlassen.

Ferner wurde die Erfindung in Bezug auf bestimmte Ausführungsformen beschrieben, die jedoch nur zum besseren Verständnis der Erfindung dienen sollen, und diese nicht einschränken sollen. Der Fachmann erkennt auch sofort, dass viele verschiedene Kombinationen der Elemente zur Ausführung der vorliegenden Erfindung verwendet werden können.

Auch wenn in den zuvor beschriebenen Ausführungsformen eine bestimmte Anzahl von Komponenten genannt sind, kann gemäß weiterer Ausführungsformen eine andere Anzahl dieser Komponenten zur Anwendung kommen.

Weitere Aspekte der Erfindung:
Aspekt 1: Schwenkvorrichtung (10) für eine Werkstückspindel einer Werkzeugmaschine (1), insbesondere einer Drehmaschine, zur Bearbeitung eines Werkstücks (W), insbesondere von Stangenmaterial, das bevorzugt zumindest abschnittsweise aus Metall oder dergleichen ausgebildet ist, umfassend:
   ein Gehäuse (11) zum Anbringen der Schwenkvorrichtung (10) an einer Werkzeugmaschine (1),
   eine Trägervorrichtung (20) zur Aufnahme einer Werkstückspindel (30) der Werkzeugmaschine (1), die drehbar in dem Gehäuse (11) gelagert ist, und
   einen am Gehäuse (11), insbesondere im Gehäuse (11), vorgesehenen Antrieb (12) zum Antreiben einer Schwenk- und/oder Drehbewegung der Trägervorrichtung (20) um eine Schwenkachse (Y₁) relativ zum Gehäuse (11),
   dadurch gekennzeichnet, dass der Antrieb ein Torquemotor oder ein Master-Slave Zahnradantrieb ist.
Aspekt 2: Schwenkvorrichtung (10) nach Aspekt 1, bei welcher der Torquemotor ein Motor mit einem Haltemoment von mehr als 100 Nm ist und bevorzugt als ein Direktantrieb ausgebildet ist, und/oder der Antrieb (12) dazu eingerichtet ist, einen Schrittwinkel von ± 50 Winkelsekunden, bevorzugt ± 10 Winkelsekunden, weiter bevorzugt ± 50 Winkelsekunden, zu realisieren.
Aspekt 3: Schwenkvorrichtung (10) nach Aspekt 1 oder 2, bei der die Trägervorrichtung (20) eine Hohlwelle (21) aufweist, welche als Antriebswelle des Torquemotors oder der Master-Slave Zahnradantriebs dient, wobei bevorzugt der Torquemotor direkt auf der Hohlwelle (21) oder Antriebswelle sitzt.
Aspekt 4: Schwenkvorrichtung (10) nach einem der vorhergehenden Aspekte, bei welcher der Torquemotor als ein Mittendrehantrieb ausgebildet ist, so dass beide Enden einer/der Antriebswelle freiliegen, wobei bevorzugt die beiden Enden der Antriebswelle (21) in dem Gehäuse (11) drehbar gelagert sind.
Aspekt 5: Schwenkvorrichtung (10) nach einem der vorhergehenden Aspekte, bei der die Trägervorrichtung (20) einen Spindelträger (22) aufweist, an dem die Werkstückspindel (30) derart angebracht ist, dass eine Spindelachse (S₁) einer Werkstückaufnahme (31), die um die Spindelachse (S₁) drehbar ist, quer, insbesondere senkrecht, zur Schwenkachse (Y₁) ist.
Aspekt 6: Schwenkvorrichtung (10) nach Aspekt 5, bei der die Werkstückspindel (30) mittels einer Führungseinrichtung (40), insbesondere einem Schlittensystem, an dem Spindelträger (22) parallel zur Spindelachse (S₁) verschiebbar gelagert ist.
Aspekt 7: Schwenkvorrichtung (10) nach einem der vorhergehenden Aspekte, bei der die Werkstückspindel (30) mittels der Schwenkvorrichtung (10) zumindest um einen Winkel von ± 50°, insbesondere zumindest um einen Winkel von ± 95°, um eine Ausgangsstellung dreh- oder schwenkbar ist, wobei bevorzugt die Ausgangsstellung eine Vertikalstellung der Werkstückspindel (30) ist.
Aspekt 8: Schwenkvorrichtung (10) nach einem der vorhergehenden Aspekte, ferner umfassend eine Klemmeinrichtung, insbesondere eine Sicherheitsklemmeinrichtung, welche bevorzugt pneumatisch oder hydraulisch betätigbar ist.
Aspekt 9: Schwenkvorrichtung (10) nach einem der vorhergehenden Aspekte, ferner umfassend ein Messsystem, insbesondere ein Induktiv-Winkelmessgerät, mit einer Messgenauigkeit von bis zu ± 1 Winkelsekunde.
Aspekt 10: Werkzeugträger (50) für eine Werkzeugmaschine (1), insbesondere einer Drehmaschine, zur Bearbeitung eines Werkstücks (W), insbesondere von Stangenmaterial, das bevorzugt zumindest abschnittsweise aus Metall oder dergleichen ausgebildet ist, umfassend:
   einen Revolverkopf (51) umfassend eine Vielzahl von Werkzeugaufnahmen (52) zur Aufnahme von Werkzeugen (53), und
   eine Lünette (54), die dazu eingerichtet ist, Werkstücke (W), die in einer mit dem Werkzeugträger (50) versehenen Werkzeugmaschine (1) bearbeitet werden, abzustützen.
Aspekt 11: Werkzeugträger (50) nach Aspekt 10, ferner umfassend:
   eine Führungseinrichtung (55), insbesondere ein Schlittensystem, mittels welcher der Revolverkopf (51) parallel zu einer Drehachse (X₁) des Revolverkopfs (51) verfahrbar ist, und/oder
   eine weitere Führungseinrichtung (56), insbesondere Schlittensystem) mittels welcher der Revolverkopf (51) quer, insbesondere senkrecht, zu der Drehachse (X₁) des Revolverkopfs (51) verfahrbar ist.
Aspekt 12: Werkzeugträger (50) nach Aspekt 10 oder 11, wobei die Drehachse (X₁) des Revolverkopfs (51) parallel zu einer Drehachse (S₁-S₂) eines durch die Lünette (54) abstützbaren Werkstücks (W) ist.
Aspekt 13: Werkzeugmaschine (1), insbesondere Drehmaschine, zur Bearbeitung eines Werkstücks (W), insbesondere von Stangenmaterial, das bevorzugt zumindest abschnittsweise aus Metall oder dergleichen ausgebildet ist, umfassend:
   ein Maschinengestell (110),
   eine am Maschinengestell (110) angeordnete Werkstückspindel (30) mit einer um eine Spindelachse (S₁) drehbaren Werkstückaufnahme (31),
   eine weitere am Maschinengestell (110) angeordnete Werkstückspindel (120) mit einer um eine weitere Spindelachse (S₂) drehbaren weiteren Werkstückaufnahme (121),
   einen ersten mit mindestens einem Werkzeug bestückbaren Werkzeugträger (130) zur Bearbeitung eines in der Werkstückspindel (30) gehaltenen Werkstücks (W) auf einer Seite (V), und
   eine Schwenkvorrichtung zum Schwenken und/oder Drehen der Werkstückspindel (30) um eine Schwenkachse (Y₁), die in etwa parallel zu einer Grundfläche (G), auf der das Maschinengestell (110) aufgestellt ist, ausgerichtet ist, dadurch gekennzeichnet, dass die Werkstückspindel (30) mittels der Schwenkvorrichtung, insbesondere der Schwenkvorrichtung (10) nach einem der Aspekte 1 bis 9, stufenlos um eine Ausgangsstellung dreh- oder schwenkbar ist.
Aspekt 14: Werkzeugmaschine (1) nach Aspekt 13, bei der die Werkstückspindel (30) mittels der Schwenkvorrichtung (10) zumindest um einen Winkel von ± 50°, insbesondere zumindest um einen Winkel von ± 95°, um eine Ausgangsstellung dreh- oder schwenkbar ist, wobei bevorzugt die Ausgangsstellung eine Vertikalstellung der Werkstückspindel (30) ist.
Aspekt 15: Werkzeugmaschine (1) nach Aspekt 13 oder 14, bei der die schwenkbare Werkstückspindel (30) in Bearbeitungsflussrichtung vor oder hinter der weiteren Werkstückspindel (120) angeordnet ist.
Aspekt 16: Werkzeugmaschine (1) nach einem der Aspekte 13 bis 15, ferner umfassend einen zweiten mit mindestens einem Werkzeug bestückbaren Werkzeugträger (140) zur Bearbeitung eines in der weiteren Werkstückspindel (120) gehaltenen Werkstücks (W) auf einer anderen Seite (R), wobei bevorzugt der erste Werkzeugträger (130) und/oder der zweite Werkzeugträger (140) der Werkzeugträger (50) nach einem der Aspekt 10 bis 12 ist/sind.
Aspekt 17: Werkzeugmaschine (1) nach einem der Aspekte 13 bis 16, ferner umfassend eine Fräs- und/oder Schleifeinrichtung (150) mit einer Werkzeugspindel (151) zur Fräs- und/oder Schleifbearbeitung eines in der Werkstückspindel (30) und/oder in der weiteren Werkstückspindel (130) gehaltenen Werkstücks (W).
Aspekt 18: Werkzeugmaschine (1) nach Aspekt 17, bei der die Fräs- und/oder Schleifeinrichtung (150) ferner eine Führungseinrichtung (155) aufweist, insbesondere ein Schlittensystem, mittels welcher die Werkzeugspindel (151) quer, insbesondere senkrecht, zu einer Spindelachse (Z₁) der Werkzeugspindel (151) verfahrbar ist, wobei die Werkzeugspindel (151) bevorzugt vertikal ausgerichtet ist und die Führungseinrichtung (155) eine Bewegung parallel zur Schwenkachse (Y₁) der Schwenkvorrichtung (10) in einer sogenannten Y-Richtung ermöglicht.
Aspekt 19: Werkzeugmaschine (1) nach Aspekt 17 oder 18, bei der die Schwenkvorrichtung (10) und/oder die Führungseinrichtung (40) so eingerichtet sind, dass ein in der Werkstückspindel (30) aufgenommenes Werkstück (W) in einen Bearbeitungsbereich der Werkzeugspindel (151) gebracht werden kann, wobei insbesondere die Spindelachse (S₁) der Werkstückspindel (30) in eine schräge Ausrichtung in Bezug auf die Spindelachse (Z₁) der Werkzeugspindel (151) bringbar ist.
Aspekt 20: Werkzeugmaschine (1) nach einem der Aspekte 13 bis 19, bei welcher der erste Werkzeugträger (130) und/oder der zweite Werkzeugträger (140) ferner eine Führungseinrichtung (57) aufweist, insbesondere ein Schlittensystem, mittels welcher ein/der Revolverkopf des Werkzeugträgers (130, 140) quer, insbesondere senkrecht, zu der jeweiligen Spindelachse (S₁, S₂) verfahrbar ist, wobei die Führungseinrichtung (57) bevorzugt eine Bewegung parallel zur Schwenkachse (Y₁) der Schwenkvorrichtung (10) in einer sogenannten Y-Richtung ermöglicht.
Aspekt 21: Werkzeugmaschine (1) nach einem der Aspekte 13 bis 20, bei welcher die erste Werkstückspindel (30) und/oder die zweite Werkstückspindel (120) als ein Direktantrieb mit einer Hohlwelle ausgebildet ist, bei dem das unbearbeitete Werkstück (W) bevorzugt durch eine Hohlwelle des Direktantriebs zu der Werkstückaufnahme (31, 121) zuführbar ist.
Aspekt 22: Werkzeugmaschine (1) nach Aspekt 21, bei welcher der ersten Werkstückspindel (30) und/oder der zweiten Werkstückspindel (120) eine Stangenzuführeinrichtung, insbesondere ein Stangenlader, zugeordnet ist, mit welcher eine Werkstoffstange durch die Hohlwelle des Direktantriebs der Werkstückaufnahme (31, 122) zuführbar ist.
Aspekt 23: Werkzeugmaschine (1) nach einem der Aspekte 13 bis 22, ferner umfassend einen weitere Führungseinrichtung (160), insbesondere Schlittensystem, auf der die Schwenkvorrichtung (10) sitzt und anhand der die Schwenkvorrichtung (10) quer, insbesondere senkrecht, zu der Schwenkachse (Y₁) verfahrbar ist, insbesondere eine Bewegung in einer sogenannten X-Richtung ermöglicht ist.
Aspekt 24: Werkzeugmaschine (1) nach einem der Aspekte 17 bis 23, der auf den Anspruch 16 rückbezogen ist, ferner umfassend eine weitere Führungseinrichtung (170), insbesondere Schlittensystem, auf welcher der zweite Werkzeugträger (140) sitzt und parallel zu der Spindelachse (S₂) der zweiten Werkstückspindel (120) verfahrbar ist, wobei bevorzugt die Führungseinrichtung (160) der Schwenkreinrichtung (10) und die Führungseinrichtung (170) des zweiten Werkzeugträgers (140) gemeinsame Führungsschienen (161) verwenden.
Aspekt 25: Werkzeugmaschine (1) nach einem der Aspekte 13 bis 24, ferner umfassend ein Be- und/oder Entladesystem, wobei das Be- und Entladesystem zumindest ein Handling-System (210), ein Shuttle (220), ein Schlepprahmenband (230), ein Palettenband und/oder einen Roboter aufweist, und das Be- und/oder Entladesystem bevorzugt zur Beladung der Werkzeugmaschine mit Werkstoffstangen und/oder Halbzeugen und/oder Rohlingen und/oder zur Entladung von bearbeiteten Werkstücken vorgesehen ist.
Aspekt 26: Werkzeugmaschine (1) nach Aspekt 25, wobei das Handling-System (210) des Be- und/oder Entladesystems umfasst:
   eine erste Führungseinrichtung (211), insbesondere ein Schlittensystem, welche oberhalb eines Bearbeitungsraums der Werkzeugmaschine (1), insbesondere oberhalb der ersten Werkstückspindel (30) und/oder der zweiten Werkstückspindel (120) der Werkzeugmaschine (1) horizontal, insbesondere in einer sogenannten X-Richtung, verlaufend angeordnet ist,
   eine Greifeinrichtung (212), die dazu eingerichtet ist, ein durch die erste Werkstückspindel (30) und/oder die zweite Werkstückspindel (120) bearbeitetes und/oder zu bearbeitendes Werkstück (W) zu greifen, und
   eine zweite Führungseinrichtung (213), insbesondere ein Schlittensystem, welche auf der ersten Führungseinrichtung (211) sitzt und die Greifeinrichtung (212) trägt, wobei die Greifeinrichtung (212) quer, insbesondere senkrecht, zu der X-Richtung der ersten Führungseinrichtung (213) verfahrbar ist, insbesondere eine Bewegung vertikal in einer sogenannten Z-Richtung ermöglicht ist.
Aspekt 27: Werkzeugmaschine (1) nach Aspekt 26, bei der die Greifeinrichtung (212) eine Greifer-Schwenkvorrichtung aufweist, anhand welcher der Greifer um eine horizontale Schwenkachse (Y₂) schwenkbar ist, insbesondere um einen Winkel von ± 90 Grad schwenkbar ist.

## Patentansprüche

1. Schwenkvorrichtung (10) für eine Werkstückspindel einer Werkzeugmaschine (1), insbesondere einer Drehmaschine, zur Bearbeitung eines Werkstücks (W), insbesondere von Stangenmaterial, das bevorzugt zumindest abschnittsweise aus Metall oder dergleichen ausgebildet ist, umfassend:
ein Gehäuse (11) zum Anbringen der Schwenk-vorrichtung (10) an einer Werkzeugmaschine (1),
eine Trägervorrichtung (20) zur Aufnahme einer Werkstückspindel (30) der Werkzeugmaschine (1), die drehbar in dem Gehäuse (11) gelagert ist, und
einen am Gehäuse (11), insbesondere im Gehäuse (11), vorgesehenen Antrieb (12) zum Antreiben einer Schwenk- und/oder Drehbewegung der Trägervorrichtung (20) um eine Schwenkachse (Y₁) relativ zum Gehäuse (11),
**dadurch gekennzeichnet, dass** der Antrieb ein Torquemotor mit einem Haltemoment von mehr als 100 Nm ist oder ein Master-Slave Zahnradantrieb ist.

2. Schwenkvorrichtung (10) nach Anspruch 1, bei welcher der Torquemotor als ein Direktantrieb ausgebildet ist, und/oder der Antrieb (12) dazu eingerichtet ist, einen Schrittwinkel von ± 50 Winkelsekunden, bevorzugt ± 10 Winkelsekunden, weiter bevorzugt ± 50 Winkelsekunden, zu realisieren.

3. Schwenkvorrichtung (10) nach Anspruch 1 oder 2, bei der
die Trägervorrichtung (20) eine Hohlwelle (21) aufweist, welche als Antriebswelle des Torquemotors oder der Master-Slave Zahnradantriebs dient, wobei bevorzugt der Torquemotor direkt auf der Hohlwelle (21) oder Antriebswelle sitzt, und/oder der Torquemotor als ein Mittendrehantrieb ausgebildet ist, so dass beide Enden einer/der Antriebswelle freiliegen, wobei bevorzugt die beiden Enden der Antriebswelle (21) in dem Gehäuse (11) drehbar gelagert sind.

4. Schwenkvorrichtung (10) nach einem der vorhergehenden Ansprüche, bei der die Trägervorrichtung (20) einen Spindelträger (22) aufweist, an dem die Werkstückspindel (30) derart angebracht ist, dass eine Spindelachse (S₁) einer Werkstückaufnahme (31), die um die Spindelachse (S₁) drehbar ist, quer, insbesondere senkrecht, zur Schwenkachse (Y₁) ist, und die Werkstückspindel (30) bevorzugt mittels einer Führungseinrichtung (40), insbesondere einem Schlittensystem, an dem Spindelträger (22) parallel zur Spindelachse (S₁) verschiebbar gelagert ist.

5. Schwenkvorrichtung (10) nach einem der vorhergehenden Ansprüche, bei der die Werkstückspindel (30) mittels der Schwenkvorrichtung (10) zumindest um einen Winkel von ± 50°, insbesondere zumindest um einen Winkel von ± 95°, um eine Ausgangsstellung dreh- oder schwenkbar ist, wobei bevorzugt die Ausgangsstellung eine Vertikalstellung der Werkstückspindel (30) ist.

6. Schwenkvorrichtung (10) nach einem der vorhergehenden Ansprüche, ferner umfassend
eine Klemmeinrichtung, insbesondere eine Sicherheitsklemmeinrichtung, welche bevorzugt pneumatisch oder hydraulisch betätigbar ist, und/oder
ein Messsystem, insbesondere ein Induktiv-Winkelmessgerät, mit einer Messgenauigkeit von bis zu ± 1 Winkelsekunde.

7. Werkzeugmaschine (1), insbesondere Drehmaschine, zur Bearbeitung eines Werkstücks (W), insbesondere von Stangenmaterial, das bevorzugt zumindest abschnittsweise aus Metall oder dergleichen ausgebildet ist, umfassend:
ein Maschinengestell (110),
eine am Maschinengestell (110) angeordnete Werkstückspindel (30) mit einer um eine Spindelachse (S₁) drehbaren Werkstückaufnahme (31),
eine weitere am Maschinengestell (110) angeordnete Werkstückspindel (120) mit einer um eine weitere Spindelachse (S₂) drehbaren weiteren Werkstückaufnahme (121),
einen ersten mit mindestens einem Werkzeug bestückbaren Werkzeugträger (130) zur Bearbeitung eines in der Werkstückspindel (30) gehaltenen Werkstücks (W) auf einer Seite (V), und
eine Schwenkvorrichtung zum Schwenken und/oder Drehen der Werkstückspindel (30) um eine Schwenkachse (Y₁), die in etwa parallel zu einer Grundfläche (G), auf der das Maschinengestell (110) aufgestellt ist, ausgerichtet ist, **dadurch gekennzeichnet, dass** die Werkstückspindel (30) mittels der Schwenkvorrichtung, insbesondere der Schwenkvorrichtung (10) nach einem der Ansprüche 1 bis 6, stufenlos um eine Ausgangsstellung dreh- oder schwenkbar ist.

8. Werkzeugmaschine (1) nach Anspruch 7, bei der
die Werkstückspindel (30) mittels der Schwenkvorrichtung (10) zumindest um einen Winkel von ± 50°, insbesondere zumindest um einen Winkel von ± 95°, um eine Ausgangsstellung dreh- oder schwenkbar ist, wobei bevorzugt die Ausgangsstellung eine Vertikalstellung der Werkstückspindel (30) ist, und/oder
die schwenkbare Werkstückspindel (30) in Bearbeitungsflussrichtung vor oder hinter der weiteren Werkstückspindel (120) angeordnet ist.

9. Werkzeugmaschine (1) nach Anspruch 7 oder 8, ferner umfassend einen zweiten mit mindestens einem Werkzeug bestückbaren Werkzeugträger (140) zur Bearbeitung eines in der weiteren Werkstückspindel (120) gehaltenen Werkstücks (W) auf einer anderen Seite (R), wobei bevorzugt der erste Werkzeugträger (130) und/oder der zweite Werkzeugträger (140) der Werkzeugträger (50) nach einem der Ansprüche 10 bis 12 ist/sind, und/oder
eine Fräs- und/oder Schleifeinrichtung (150) mit einer Werkzeugspindel (151) zur Fräs- und/oder Schleifbearbeitung eines in der Werkstückspindel (30) und/oder in der weiteren Werkstückspindel (130) gehaltenen Werkstücks (W).

10. Werkzeugmaschine (1) nach Anspruch 9, bei der die Fräs- und/oder Schleifeinrichtung (150) ferner eine Führungseinrichtung (155) aufweist, insbesondere ein Schlittensystem, mittels welcher die Werkzeugspindel (151) quer, insbesondere senkrecht, zu einer Spindelachse (Z₁) der Werkzeugspindel (151) verfahrbar ist, wobei die Werkzeugspindel (151) bevorzugt vertikal ausgerichtet ist und die Führungseinrichtung (155) eine Bewegung parallel zur Schwenkachse (Y₁) der Schwenkvorrichtung (10) in einer sogenannten Y-Richtung ermöglicht.

11. Werkzeugmaschine (1) nach Anspruch 9 oder 10, bei der
die Schwenkvorrichtung (10) und/oder die Führungseinrichtung (40) so eingerichtet sind, dass ein in der Werkstückspindel (30) aufgenommenes Werkstück (W) in einen Bearbeitungsbereich der Werkzeugspindel (151) gebracht werden kann, wobei insbesondere die Spindelachse (S₁) der Werkstückspindel (30) in eine schräge Ausrichtung in Bezug auf die Spindelachse (Z₁) der Werkzeugspindel (151) bringbar ist, und/oder
der erste Werkzeugträger (130) und/oder der zweite Werkzeugträger (140) ferner eine Führungseinrichtung (57) aufweist, insbesondere ein Schlittensystem, mittels welcher ein/der Revolverkopf des Werkzeugträgers (130, 140) quer, insbesondere senkrecht, zu der jeweiligen Spindelachse (S₁, S₂) verfahrbar ist, wobei die Führungseinrichtung (57) bevorzugt eine Bewegung parallel zur Schwenkachse (Y₁) der Schwenkvorrichtung (10) in einer sogenannten Y-Richtung ermöglicht.

12. Werkzeugmaschine (1) nach einem der Ansprüche 7 bis 11, bei welcher
die erste Werkstückspindel (30) und/oder die zweite Werkstückspindel (120) als ein Direktantrieb mit einer Hohlwelle ausgebildet ist, bei dem das unbearbeitete Werkstück (W) bevorzugt durch eine Hohlwelle des Direktantriebs zu der Werkstückaufnahme (31, 121) zuführbar ist, und/oder
der ersten Werkstückspindel (30) und/oder der zweiten Werkstückspindel (120) eine Stangenzuführeinrichtung, insbesondere ein Stangenlader, zugeordnet ist, mit welcher eine Werkstoffstange durch die Hohlwelle des Direktantriebs der Werkstückaufnahme (31, 122) zuführbar ist, und/oder
ferner umfassend einen weitere Führungseinrichtung (160), insbesondere Schlittensystem, auf der die Schwenk-vorrichtung (10) sitzt und anhand der die Schwenkvorrichtung (10) quer, insbesondere senkrecht, zu der Schwenkachse (Y₁) verfahrbar ist, insbesondere eine Bewegung in einer sogenannten X-Richtung ermöglicht ist.

13. Werkzeugmaschine (1) nach einem der Ansprüche 10 bis 12, der auf den Anspruch 9 rückbezogen ist, ferner umfassend eine weitere Führungseinrichtung (170), insbesondere Schlittensystem, auf welcher der zweite Werkzeugträger (140) sitzt und parallel zu der Spindelachse (S₂) der zweiten Werkstückspindel (120) verfahrbar ist, wobei bevorzugt die Führungseinrichtung (160) der Schwenkreinrichtung (10) und die Führungseinrichtung (170) des zweiten Werkzeug-trägers (140) gemeinsame Führungsschienen (161) verwenden.

14. Werkzeugmaschine (1) nach einem der Ansprüche 7 bis 13, ferner umfassend ein Be- und/oder Entladesystem, wobei das Be- und Entladesystem zumindest ein Handling-System (210), ein Shuttle (220), ein Schlepprahmenband (230), ein Palettenband und/oder einen Roboter aufweist, und das Be- und/oder Entladesystem bevorzugt zur Beladung der Werkzeugmaschine mit Werkstoffstangen und/oder Halbzeugen und/oder Rohlingen und/oder zur Entladung von bearbeiteten Werkstücken vorgesehen ist.

15. Werkzeugmaschine (1) nach Anspruch 14, wobei das Handling-System (210) des Be- und/oder Entladesystems umfasst:
eine erste Führungseinrichtung (211), insbesondere ein Schlittensystem, welche oberhalb eines Bearbeitungsraums der Werkzeugmaschine (1), insbesondere oberhalb der ersten Werkstückspindel (30) und/oder der zweiten Werkstück-spindel (120) der Werkzeugmaschine (1) horizontal, insbesondere in einer sogenannten X-Richtung, verlaufend angeordnet ist,
eine Greifeinrichtung (212), die dazu eingerichtet ist, ein durch die erste Werkstückspindel (30) und/oder die zweite Werkstückspindel (120) bearbeitetes und/oder zu bearbeitendes Werkstück (W) zu greifen, und
eine zweite Führungseinrichtung (213), insbesondere ein Schlittensystem, welche auf der ersten Führungsein-richtung (211) sitzt und die Greifeinrichtung (212) trägt, wobei die Greifeinrichtung (212) quer, insbesondere senkrecht, zu der X-Richtung der ersten Führungsein-richtung (213) verfahrbar ist, insbesondere eine Bewegung vertikal in einer sogenannten Z-Richtung ermöglicht ist, wobei die Greifeinrichtung (212) bevorzugt eine Greifer-Schwenkvorrichtung aufweist, anhand welcher der Greifer um eine horizontale Schwenkachse (Y₂) schwenkbar ist, insbesondere um einen Winkel von ± 90 Grad schwenkbar ist.
